# EUROPÄISCHE PATENTANMELDUNG

(11) **EP 3 734 381 A1**
(43) Veröffentlichungstag der Anmeldung: **04.11.2020**
(21) Anmeldenummer: 20000160.0
(22) Anmeldetag: 20.04.2020
(51) Int. Cl.: G05B 19/4065

(54) **VERFAHREN ZUM ERKENNEN VON DROHENDEN AUSFÄLLEN VON KOMPONENTEN VON MASCHINEN, INSBESONDERE VON ANTRIEBSEINHEITEN**

(30) Priorität: 26.04.2019 DE 102019003081
(71) Anmelder: Stöber Antriebstechnik GmbH & Co. KG, 75177 Pforzheim (DE)
(72) Erfinder: SCHOLZE, Stephan, 73505 Neuenbürg (DE); KRAUS, Benjamin, 75249 Kieselbronn (DE); WAGNER, Artur, 75196 Remchingen (DE); KÜBLER, Johannes, 74653 Künzelsau (DE)
(74) Vertreter: Kohl, Karl-Heinz

(57) **Zusammenfassung**

Mit dem Verfahren wird mit wenigstens einem Sensor (3) ein für die fehlerfreie Funktion der Maschinenkomponente charakteristischer Parameter über eine Zeit erfasst und als Sensorsignal einer Datenverarbeitungseinrichtung (8) zugeführt. Sie erstellt anhand der Sensorsignale eine Zeit-Parameter-Kurve und errechnet aus ihr eine Grenzwertkurve bzw. Grenzwerte. Dadurch kann ein drohender Ausfall von Maschinenkomponenten rechtzeitig angekündigt werden und es ist ein rechtzeitiger Austausch dieser Maschinenkomponente möglich, ohne dass die Gefahr besteht, dass weitere Maschinenkomponenten beschädigt werden.

## Beschreibung

Die Erfindung betrifft ein Verfahren zum Erkennen von drohenden Ausfällen von Komponenten von Maschinen, insbesondere von Antriebseinheiten, nach Anspruch 1.

Es ist bekannt, kritische Maschinenteile während des Einsatzes der Maschine zu überwachen. So werden beispielsweise Belastungen einer Maschinenspindel durch Sensoren erfasst, deren Signale einer Datenverarbeitungseinrichtung zugeführt werden, die dann ein Warnsignal ausgibt, wenn eine zulässige Belastung der Maschinenspindel erreicht bzw. überschritten worden ist.

Es ist darüber hinaus bekannt, Maschinenkomponenten nach einer vorgegebenen Einsatzzeit auszutauschen. Dieser Komponentenaustausch kann zu früh erfolgen, d.h. die Maschinenkomponente hätte durchaus noch längere Zeit ordnungsgemäß arbeiten können. Es kann auch vorkommen, dass die Maschinenkomponente zu diesem Zeitpunkt schon beschädigt ist. Dann besteht die Gefahr, dass sie weitere Maschinenteile beschädigt.

Der Erfindung liegt die Aufgabe zugrunde, das Verfahren so auszubilden, dass ein drohender Ausfall von Maschinenkomponenten rechtzeitig angekündigt werden kann und ein rechtzeitiger Austausch dieser Maschinenkomponente möglich ist, ohne dass die Gefahr besteht, dass weitere Maschinenkomponenten beschädigt werden.

Diese Aufgabe wird erfindungsgemäß mit den Merkmalen des Anspruches 1 gelöst.

Beim erfindungsgemäßen Verfahren werden die Maschinen im Neuzustand in Betrieb genommen und dabei vom Sensor für die zu überwachende Maschinenkomponente charakteristische Parameter über die Maschineneinsatzzeit erfasst. Die Sensorsignale werden der Datenverarbeitungseinrichtung zugeführt, welche diese Rohdaten speichert. Die Messung dieser Maschinen kann kontinuierlich über eine vorgegebene Zeit vorgenommen werden. Es ist aber auch eine diskontinuierliche Messung möglich, bei der über eine vorgegebene Zeit die Maschine stets nur zeitweise in Betrieb genommen wird. Die Datenverarbeitungseinrichtung erstellt aus den Sensorsignalen eine Kurve bzw. Parameterwerte über die Zeit. Dadurch wird die Komponente der Maschine im Neuzustand erfasst (Gutzustand). Diese Kurve bzw. die Parameterwerte bilden einen Bezug, anhand dem die Datenverarbeitungseinrichtung nach Ablauf der Prüfzeit eine Grenzwertkurve bzw. Grenzwerte bestimmt. Diese Berechnung der Grenzwertkurve bzw. der Grenzwerte kann dadurch erfolgen, dass die die Zeit-Parameter-Kurve bildenden Parametergrößen über die Zeit bzw. die Grenzwerte beispielhaft verdoppelt werden. Der Abstand zwischen der Zeit-Parameter-Kurve bzw. den Parameterwerten und der Grenzwertkurve bzw. den Grenzwerten bildet dann den Zeitraum, in dem die überwachte Maschinenkomponente voraussichtlich ordnungsgemäß arbeiten kann bzw. ihr Verschleißgrad nur so groß ist, dass ein Austausch der überwachten Maschinenkomponente nicht zu früh, aber auch nicht zu spät vorgenommen werden kann.

Parameter, die Aussagen über die Funktionsfähigkeit und/oder den Verschleiß der überwachten Maschinenkomponente machen können, sind beispielsweise ein zu übertragendes Drehmoment, die Temperatur im Bereich der Maschinenkomponente, die Beschleunigung und dergleichen.

Der Abstand zwischen der Grenzwertkurve bzw. den Grenzwerten und der zuvor erstellten Zeit-Parameter-Kurve bzw. den Parameterwerten, die den Gutzustand der zu überwachenden Maschinenkomponente darstellt, ist die zu erwartende Einsatzdauer der Maschinenkomponente, bevor ihr Ausfall zu erwarten ist.

Um die Vorhersage, wann ein drohender Ausfall der Maschinenkomponente zu erwarten ist, zu verbessern, ist die Datenverarbeitungseinrichtung in vorteilhafter Weise selbstlernend ausgebildet. Sie erfasst die vom Sensor übersandten Parametersignale und gleicht in Zeitabständen ab, ob der tatsächliche Parameterwert bereits nahe an die Grenzwertkurve bzw. den Grenzwert gelangt oder noch Abstand hat. Dementsprechend kann die Grenzwertkurve bzw. der Grenzwert an die tatsächlichen Verhältnisse angepasst werden. Sollte sich beispielsweise zeigen, dass der gemessene Parameterwert zum Messzeitpunkt den entsprechenden Wert der Grenzwertkurve bzw. den Grenzwert erreicht hat, die Maschinenkomponente jedoch noch in Ordnung war, dann war die Grenzwertkurve bzw. dem Grenzwert zu niedrig angesetzt und wird von der Datenverarbeitungseinrichtung entsprechend hochgesetzt. Auf diese Weise wird die Grenzwertkurve bzw. der Grenzwert selbsttätig an die tatsächlichen Verhältnisse angepasst. Dadurch ist gewährleistet, dass die überwachte Maschinenkomponente nicht zu früh, aber auch nicht zu spät ausgewechselt wird.

Die Datenverarbeitungseinrichtung überprüft in vorteilhafter Weise nach der Erstellung der Grenzwertkurve bzw. der Grenzwerte die Signale im Hinblick auf die mögliche Anpassung der Grenzwertkurve bzw. der Grenzwerte. Dies kann kontinuierlich über die Zeit, aber auch diskontinuierlich vorgenommen werden, indem diese Überprüfung in einzelnen Zeitintervallen vorgenommen wird.

Die Datenverarbeitungseinrichtung erzeugt dann ein Warnsignal, wenn der von ihr erfasste Parameterwert zu einem vorgegebenen Zeitpunkt den Wert der Grenzwertkurve bzw. den Grenzwert erreicht. Dann wird der Anwender der Maschine darauf aufmerksam gemacht, dass mit einem Ausfall der überwachten Maschinenkomponente zu rechnen ist und daher ein Austausch erforderlich ist, um nicht noch andere Maschinenkomponenten zu beschädigen.

Das Warnsignal wird in vorteilhafter Weise über den Sensor der Maschine einer Steuerung dieser Maschine zugeführt. Die Steuerung kann dieses Warnsignal entsprechend verwerten, beispielsweise ein akustisches und/ oder optisches Warnsignal ausgeben oder eine Nachricht auf einem Bildschirm oder einem Handy hinterlassen.

Vorteilhaft sind an die Steuerung mehrere Sensoren mehrerer Maschinen angeschlossen, wobei vorteilhaft jede dieser Maschinen wenigstens einen Sensor aufweist, dessen Sensorsignale der Datenverarbeitungseinrichtung zugeführt werden. Dabei können die Sensoren der unterschiedlichen Maschinen unterschiedliche Parametergrößen und/oder unterschiedliche Maschinenkomponenten überwachen.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird nachstehend anhand eines in den Zeichnungen dargestellten Ausführungsbeispieles näher erläutert. Es zeigen
- Fig. 1: in schematischer Darstellung eine Einrichtung zur Durchführung des erfindungsgemäßen Verfahrens,
- Fig. 2: in schematischer Darstellung die Verarbeitung von Sensordaten,
- Fig. 3: in schematischer Darstellung den automatischen Lernprozess bei der Einrichtung gemäß Fig. 1,
- Fig. 4: in schematischer Darstellung mögliche Verfahrensweisen bei der Verarbeitung der Sensordaten,
- Fig. 5: in schematischer Darstellung eine den Gutzustand einer Maschinenkomponente kennzeichnende Parameter-Zeit-Kurve und eine Grenzwertkurve,
- Fig. 6: ein Beschleunigungs-Zeit-Diagramm bei Einsatz eines Beschleunigungssensors,
- Fig. 7: ein aus dem Beschleunigungs-Zeit-Diagramm gemäß Fig. 6 abgeleitetes Beschleunigungs-Frequenz-Diagramm.

Mit der im Folgenden beschriebenen Einrichtung ist es möglich, frühzeitig drohende Ausfälle von Maschinenkomponenten, insbesondere in Antriebseinheiten, zu erkennen. Im Ausführungsbeispiel ist die Antriebseinheit ein Getriebemotor 1. Solche Ausfälle können beispielsweise der Verschleiß oder der Bruch von Zähnen eines Zahnrades des Getriebemotors 1 sein. Die Einrichtung ist so ausgebildet, dass sie sich in einem Lernprozess so einstellen kann, dass für den jeweiligen Anwendungsfall ein kritischer Grenzwert festgelegt werden kann.

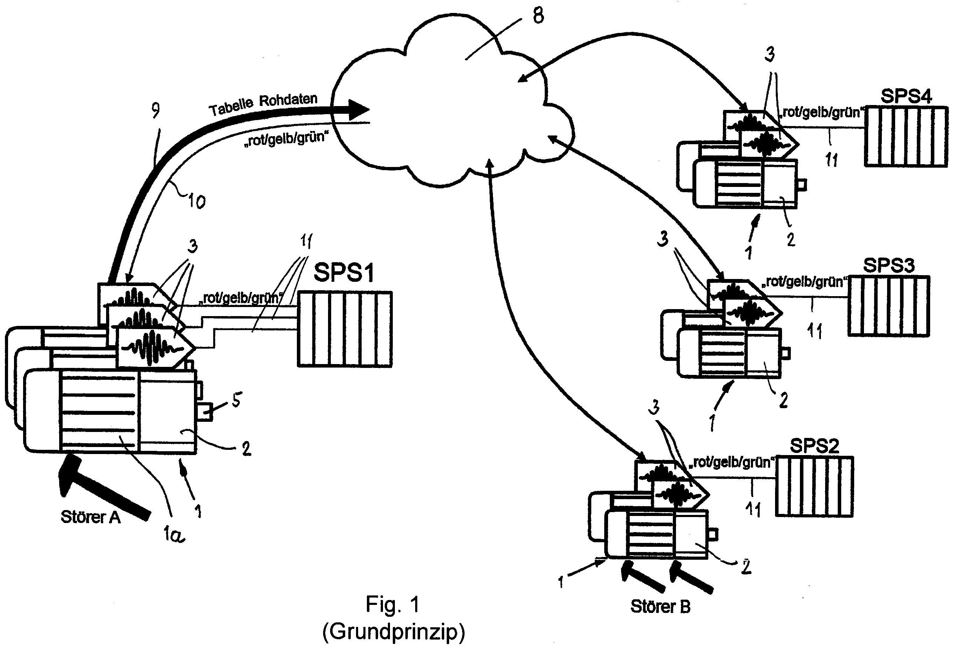

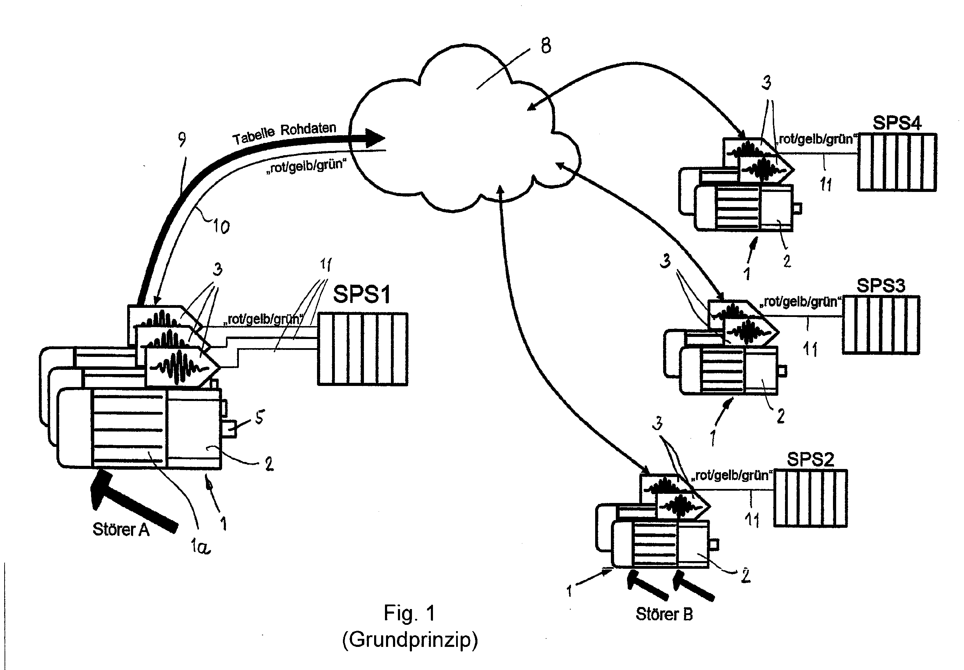

Fig. 1 zeigt beispielhaft Getriebemotoren 1, die aus Elektromotoren 1a und Getrieben 2 bestehen. Die Getriebe 2 enthalten Getrieberäder mit Zähnen, die im Einsatz der Getriebemotoren 1 einem Verschleiß ausgesetzt sind. Mit der Einrichtung ist es möglich, frühzeitig den Anwender darauf hinzuweisen, dass das Getriebe 2 der Getriebemotoren 1 bald ausfallen könnte. Sollte ein Zahn im Getriebe 2 gebrochen sein, wird dies sofort erkannt und in noch zu beschreibender Weise ein Warnsignal erzeugt.

Die Getriebemotoren 1 haben Sensoren 3, mit denen Parameter von Komponenten des Getriebemotors 1 überwacht werden können und die jeweils an eine Steuerung SPS 1 bis SPS 4 angeschlossen (Leitungen 11) sind. Es können mehrere Sensoren 3 an eine gemeinsame Steuerung SPS 1 bis SPS 4 angeschlossen sein.

Die Sensoren 3 erfassen beispielsweise Vibrationen von kritischen Getriebemotorteilen. Darüber hinaus können die Sensoren selbstverständlich auch andere kritische Parameter von Getriebemotoren 1 erfassen, wie beispielsweise den Füllstand von Getriebeöl, Ölverschmutzung, Leckage und dergleichen.

Die Sensoren 3 sind über Leitungen 11 mit der entsprechenden Steuerung SPS verbunden. Die Sensorsignale werden von der jeweiligen Steuerung SPS ausgewertet und zur Ansteuerung der Getriebemotoren 1 herangezogen.

Die Einrichtung ist darüber hinaus mit einer elektronischen Datenverarbeitungseinrichtung 8 versehen, die sich beispielsweise in einer Cloud befinden kann. Das hat den Vorteil, dass unabhängig vom Aufstellort der Getriebemotoren 1 jederzeit ein Zugriff auf die Datenverarbeitungseinrichtung 8 möglich ist.

Die Datenverarbeitungseinrichtung 8 muss nicht zwingend in der Cloud liegen, sondern kann beispielsweise auf firmeninternen Servern gespeichert sein.

Der Datenverarbeitungseinrichtung 8 werden über wenigstens eine Leitung 9 Rohdaten der an den Getriebemotoren 1 befindlichen Sensoren 3 zugeführt und dort gespeichert. Diese Rohdaten werden von der Datenverarbeitungseinrichtung 8 bei der noch zu beschreibenden Überwachung der Getriebemotoren 1 herangezogen.

Außerdem sind die Sensoren 3 über eine Zustandsleitung 10 mit der Datenverarbeitungseinrichtung 8 leitungsverbunden.

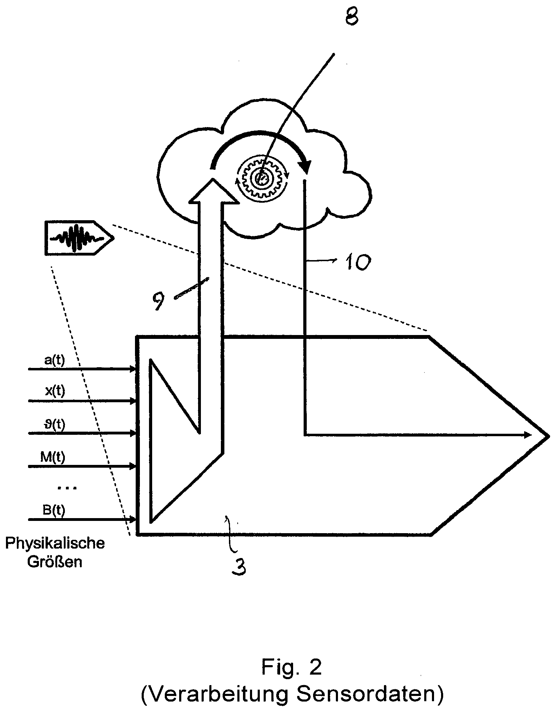

Wie sich aus Fig. 2 ergibt, können unterschiedliche physikalische Größen der Getriebemotoren 1 durch entsprechende Sensoren 3 erfasst werden. Beispielhaft sind die Beschleunigung a, der Weg x, die Temperatur ϑ, das Drehmoment M und das Magnetfeld B angegeben. Diese physikalischen Größen werden in Abhängigkeit von der Zeit erfasst und der Datenverarbeitungseinrichtung 8 zugeführt, welche diese Daten verarbeitet und über die Leitung 10 dem jeweiligen Sensor 3 zuführt.

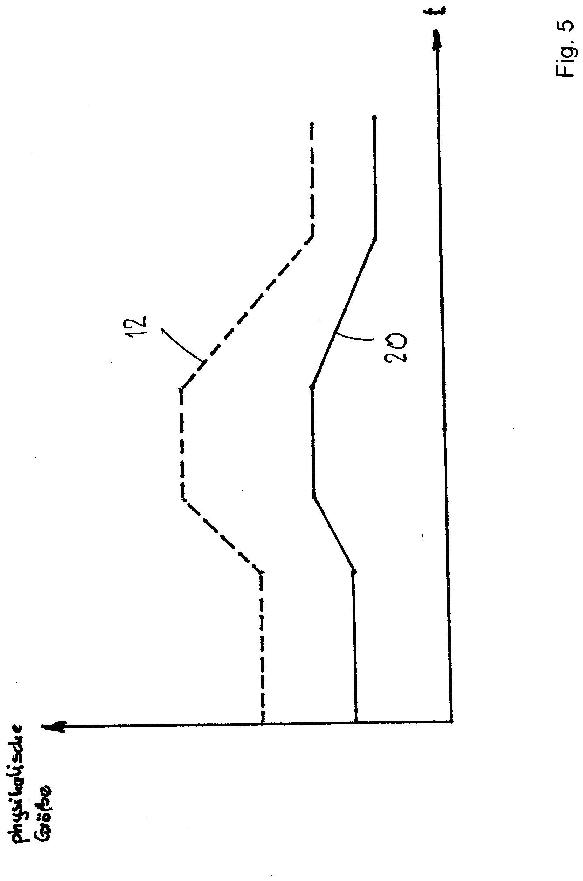

Die Getriebemotoren 1 werden zunächst im Neuzustand in Betrieb genommen und die von den Sensoren 3 erfassten Parameter laufend erfasst und gespeichert. Je nach Art der zu erfassenden physikalischen Größe werden die Getriebemotoren 1 entsprechend lange in Betrieb genommen. Diese Betriebszeit kann Tage, aber auch Monate betragen. Aus den gemessenen und gespeicherten Daten wird eine Kurve 20 erstellt (Fig. 5), die die jeweils gemessene physikalische Größe in Abhängigkeit von der Zeit darstellt. Diese erstellte Kurve 20 stellt den Ausgangszustand (Gutzustand) des Getriebemotors dar und wird in der Datenverarbeitungseinrichtung 8 abgelegt.

Auf diese Weise werden zur Bildung einer Basis-Datenbank unterschiedliche Getriebemotoren 1 gemessen und in der Datenverarbeitungseinrichtung 8 gespeichert.

Anhand der den Gutzustand charakterisierenden Kurve 20 wird von der Datenverarbeitungseinrichtung 8 selbsttätig eine Grenzwertkurve 12 erzeugt, indem beispielsweise die gemessenen Größen betragsmäßig verdoppelt werden. Dies ist beispielhaft in Fig. 5 dargestellt. Die ausgezogene Kurve 20 zeigt die gemessene physikalische Größe in Abhängigkeit von der Zeit. Die gestrichelte Kurve stellt die Grenzwertkurve 12 dar, bei deren Erreichen die Datenverarbeitungseinrichtung 8 ein Warnsignal erzeugt, um den Benutzer darauf hinzuweisen, dass ein Ausfall des jeweiligen Getriebemotors bevorsteht.

Die auf diese Weise ermittelten Kurven 12, 20 werden vorteilhaft in einer Datenbank hinterlegt. Sie enthält somit für unterschiedlichste Antriebseinheiten die zugehörigen Parameter-Zeit-Kurven, auf die bei Inbetriebnahme einer neuen Antriebseinheit zurückgegriffen werden kann.

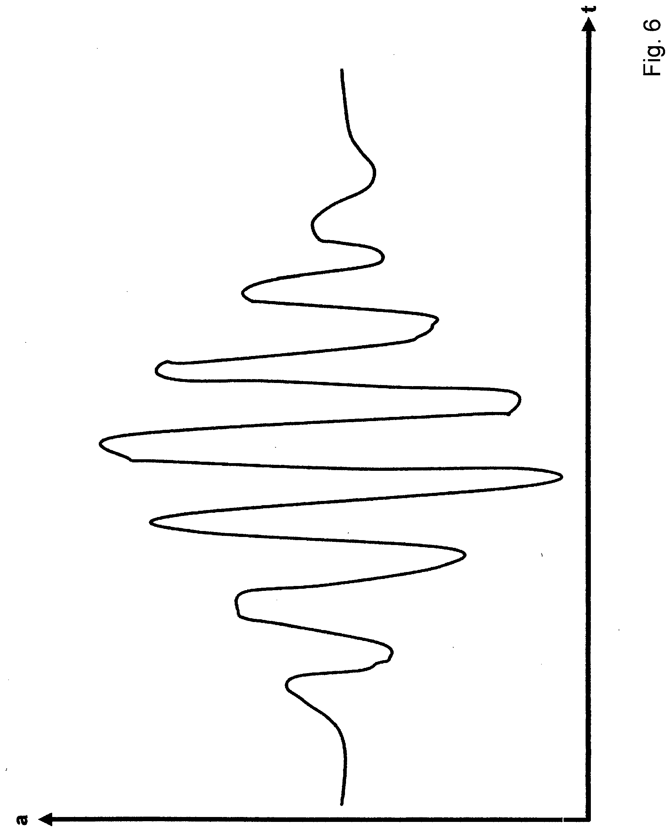

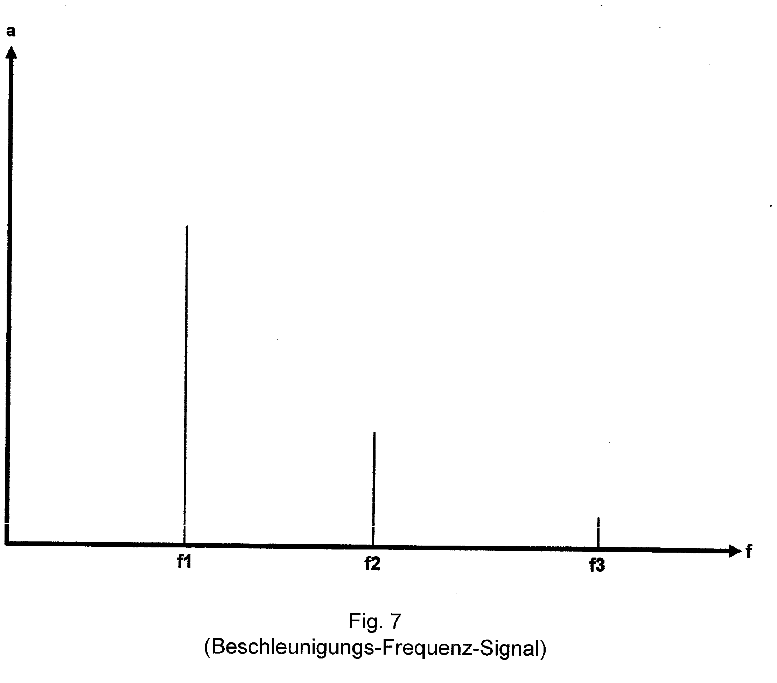

Für die Auswertung kann es erforderlich sein, die Kurve 20 in einen Frequenzbereich zu transformieren. Dies ist beispielsweise dann notwendig, wenn die physikalische Größe die Beschleunigung a ist. In diesem Fall erfasst der Sensor Vibrationen am Gehäuse des Getriebemotors 1. Durch die Vibrationen erfährt der Sensor eine Beschleunigung a. Ein beispielhaftes Beschleunigungs-Zeit-Diagramm zeigt Fig. 6. Diese Kurve wird in das Beschleunigungs-Frequenz-Diagramm transformiert, wie es beispielhaft in Fig. 7 dargestellt ist. Die Transformation erfolgt in der Datenverarbeitungseinrichtung 8. Beispielhaft sind drei Beschleunigungswerte a bei drei unterschiedlichen Frequenzen f1, f2, f3 angegeben, welche den Ausgangszustand (Gutzustand) des Getriebemotors 1 kennzeichnen.

Die Datenverarbeitungseinrichtung 8 erstellt selbsttätig aus diesen Beschleunigungswerten bei den jeweiligen Frequenzen f1, f2, f3 Grenzwerte, indem die gemessenen Beschleunigungswerte beispielhaft betragsmäßig verdoppelt werden, wie anhand der Grenzwertkurve 12 erläutert worden ist. Die Grenzwerte werden wie die Grenzwertkurve 12 vorteilhaft in einer Datenbank hinterlegt.

Im Betrieb übertragen die Sensoren 3 der Getriebemotoren 1 ständig die überwachten physikalischen Größen der Datenverarbeitungseinrichtung 8, welche diese Werte mit der Grenzwertkurve 12 bzw. den Grenzwerten der entsprechenden physikalischen Größe vergleicht.

Erreicht die jeweils gemessene physikalische Größe zu einem gegebenen Zeitpunkt t die Grenzwertkurve 12 bzw. die Grenzwerte, dann wird überprüft, ob die mit dieser physikalischen Größe überwachte Komponente des Getriebemotors 1 tatsächlich einen kritischen Wert erreicht hat. Sollte dies nicht der Fall sein, war die von der Datenverarbeitungseinrichtung 8 erzeugte Grenzwertkurve 12 bzw. der Grenzwert zu niedrig eingestellt. Dann erhält die Datenverarbeitungseinrichtung 8 vom Anwender eine entsprechende Rückmeldung. Die Datenverarbeitungseinrichtung 8 passt dann die Grenzwertkurve 12 bzw. Grenzwerte selbsttätig an. Im Beispiel setzt die Datenverarbeitungseinrichtung 8 die Grenzwertkurve 12 bzw. Grenzwerte entsprechend höher.

War hingegen bei Erreichen der Grenzwertkurve 12 bzw. der Grenzwerte zum Zeitpunkt t die überwachte Komponente des Getriebemotors 1 in einem kritischen Zustand, dann war die Grenzwertkurve 12 bzw. der Grenzwert zu hoch und wird nunmehr von der Datenverarbeitungseinrichtung 8 nach entsprechender Rückmeldung automatisch auf einen niedrigeren Wert herabgesetzt. Auf diese Weise passt die Datenverarbeitungseinrichtung 8 die Grenzwertkurve 12 bzw. die Grenzwerte an den Getriebemotor 1 unter Berücksichtigung seines Arbeitsumfeldes an. Das Arbeitsumfeld, in dem der Getriebemotor 1 arbeitet, ist in Fig. 1 durch "Störer A" und "Störer B" veranschaulicht. Der gleiche Getriebemotor 1 kann z. B. an einer Maschine zum Zerkleinern von harten Gegenständen (Störer A) oder an einer Maschine zur Behandlung von Textilien (Störer B) eingesetzt werden. Das Arbeitsumfeld der Getriebemotoren 1 ist dementsprechend sehr unterschiedlich und hat Einfluss auf die Sensorsignale. So treten beispielsweise bei Maschinen zum Zerkleinern von harten Gegenständen andere Vibrationen auf als bei Maschinen, mit denen weiche Materialien behandelt bzw. bearbeitet werden. Diese Einflüsse werden von der Datenverarbeitungseinrichtung 8 bei der Anpassung der Grenzwertkurve 12 bzw. der Grenzwerte berücksichtigt.

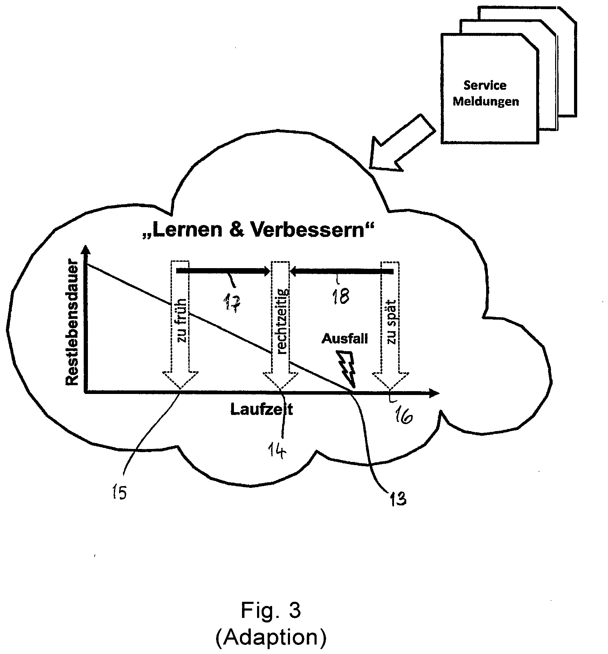

Diese Vorgehensweise der Datenverarbeitungseinrichtung 8 ist in Fig. 3 veranschaulicht. Hier ist die Lebensdauer der zu überwachenden Komponente des Getriebemotors 1 gegen die Laufzeit t aufgetragen. Erkennbar ist, dass mit zunehmender Laufzeit die Restlebensdauer abnimmt. Am Punkt 13 fällt die überwachte Komponente des Getriebemotors 1 aus. Daher wird mit der Datenverarbeitungseinrichtung 8 der Betreiber des Getriebemotors 1 rechtzeitig vor diesem Zeitpunkt benachrichtigt. Dies ist zum Zeitpunkt 14 der Fall.

In Fig. 3 ist weiter dargestellt, dass zum Zeitpunkt 15 ein Warnsignal erzeugt wird, das allerdings zu früh abgegeben wird. Dies ist der Fall, wenn die Grenzwertkurve 12 (Fig. 5) bzw. der Grenzwert zu niedrig angegeben ist. Dann wird das Warnsignal zu einem Zeitpunkt erzeugt, zu dem ein Ausfall der überwachten Komponente des Getriebemotors 1 noch nicht zu erwarten ist. Darum wird durch die Datenverarbeitungseinrichtung 8 in diesem Falle die Grenzwertkurve 12 bzw. der Grenzwert in der beschriebenen Wiese um ein entsprechendes Maß angehoben, damit das Warnsignal erst zum Zeitpunkt 14 erzeugt wird.

Ist die Grenzwertkurve 12 bzw. der Grenzwert von der Datenverarbeitungseinrichtung 8 zu hoch eingestellt worden, dann besteht die Gefahr, dass das entsprechende Warnsignal zu spät erzeugt wird.

Da die Datenverarbeitungseinrichtung 8 selbstlernend ausgebildet ist und die Grenzwertkurve 12 bzw. die Grenzwerte von sich aus so festgelegt, dass rechtzeitig vor einem Ausfall der überwachten Komponente das Warnsignal zum Zeitpunkt 14 erzeugt wird, kann der Getriebemotor 1 optimal lange eingesetzt werden.

Das Verschieben der Grenzwertkurve 12 bzw. der Grenzwerte ist in Fig. 3 durch die Pfeile 17 und 18 angedeutet. Sie deuten an, wie die Grenzwertkurve 12 bzw. die Grenzwerte so angepasst werden, dass das Warnsignal zum richtigen Zeitpunkt 14 erzeugt wird.

Der Warnhinweis kann auf unterschiedliche Weise erfolgen. So kann beispielsweise am Getriebemotor 1 ein akustisches und/oder optisches Signal erzeugt werden, das den Anwender darauf hinweist, dass dieser Getriebemotor 1 demnächst ausfallen könnte. Es ist weiter möglich, das entsprechende Warnsignal auf einem Monitor anzuzeigen. Auch kann die Einrichtung so ausgebildet sein, dass sie die Warnmeldung auf einem Handy ausgibt. Dies kann gleichzeitig auch mit den anderen Warnhinweisen erfolgen, so dass der Benutzer den Warnhinweis auch dann erhält, wenn er sich nicht in der Nähe des überwachten Getriebemotors 1 befindet. Der Handybesitzer hat dann die Möglichkeit, entweder über das Internet den betroffenen Getriebemotor 1 abzuschalten oder Techniker zu beauftragen, die sich um diesen Getriebemotor 1 kümmern. Weiter ist es möglich, das Warnsignal an einen Servicemann oder an eine Serviceabteilung zu schicken, die sich dann um den betroffenen Getriebemotor kümmern kann.

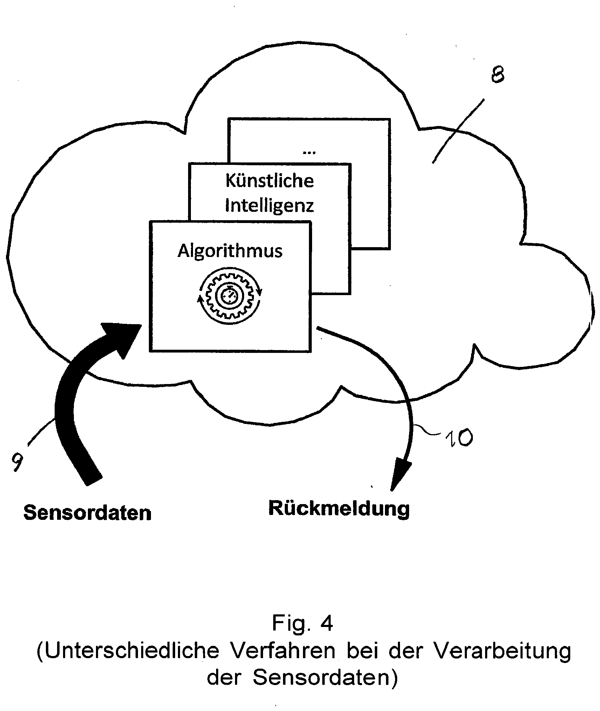

Fig. 4 zeigt schematisch, wie die über die Datenleitung 9 zugeführten Sensordaten in der Datenverarbeitungseinrichtung 8 mittels eines entsprechenden Algorithmus ausgewertet und als Rückmeldesignal über die Datenleitung 10 zum jeweiligen Sensor 3 des überwachten Getriebemotors 1 geleitet werden. Die Sensoren 3 übergeben diese Rückmeldesignale der zugehörigen Steuerung über die Leitungen 11. Erzeugt die Datenverarbeitungseinrichtung 8 das Warnsignal, dann wird dieses der Steuerung SPS zugeführt, die in der beschriebenen Weise das Warnsignal ausgibt.

Da an eine Steuerung SPS mehrere Sensoren 3 mehrerer Getriebemotoren 1 angeschlossen sein können, wie beispielhaft Fig. 1 zeigt, enthalten die über die Leitungen 9 zugeführten Rohdaten jeweils eine Kennung des zugehörigen Sensors 3. Die Rückmeldesignale werden daher den entsprechenden Sensoren 3 zugeleitet, welche diese Signale über die Leitungen 11 der Steuerung SPS zuführen. Sie erzeugt in der beschriebenen Weise das Warnsignal.

Wie beispielhaft aus Fig. 1 hervorgeht, sind mehrere Getriebemotoren 1 an die Datenverarbeitungseinrichtung 8 angeschlossen. Dies hat den Vorteil, dass die beschriebene Lernzeit der Datenverarbeitungseinrichtung 8 bezüglich der Grenzwertkurve 12 bzw. der Grenzwerte, bezogen auf alle angeschlossenen Getriebemotoren 1, gering ist.

Die beschriebene Einrichtung und Vorgehensweise werden überall dort eingesetzt, wo es um ein rechtzeitiges Erkennen eines bevorstehenden kritischen Zustandes bei Maschinenkomponenten gibt. Dies ist insbesondere bei Antriebseinheiten, wie Getriebemotoren, der Fall. Es können beispielsweise auch Antriebselektroniken von Antriebseinheiten in der beschriebenen Weise überwacht werden.

## Patentansprüche

1. Verfahren zum Erkennen von drohenden Ausfällen von Komponenten von Maschinen, insbesondere von Antriebseinheiten, bei dem mit wenigstens einem Sensor (3) ein für die fehlerfreie Funktion der Maschinenkomponente charakteristischer Parameter über eine Zeit (t) erfasst und als Sensorsignal einer Datenverarbeitungseinrichtung (8) zugeführt wird, die anhand der Sensorsignale eine Zeit-Parameter-Kurve (20) erstellt und aus ihr eine Grenzwertkurve (12) bzw. Grenzwerte errechnet.

2. Verfahren nach Anspruch 1,
**dadurch gekennzeichnet, dass** die Datenverarbeitungseinrichtung (8) selbstlernend ist und die Grenzwertkurve (12) bzw. die Grenzwerte an die tatsächlichen Verhältnisse selbsttätig anpasst.

3. Verfahren nach Anspruch 1 oder 2,
**dadurch gekennzeichnet, dass** die Datenverarbeitungseinrichtung (8) nach der Erstellung der Grenzwertkurve (12) bzw. Grenzwerte diese unter Berücksichtigung von anwenderseitigen Rückmeldungen selbsttätig anpasst.

4. Verfahren nach einem der Ansprüche 1 bis 3,
**dadurch gekennzeichnet, dass** die Datenverarbeitungseinrichtung (8) ein Warnsignal erzeugt, wenn der von ihr erfasste Parameterwert zu einem Zeitpunkt (t) den Wert der Grenzwertkurve (12) bzw. der Grenzwert erreicht.

5. Verfahren nach einem der Ansprüche 1 bis 4,
**dadurch gekennzeichnet, dass** das Warnsignal über den Sensor (3) einer Steuerung (SPS) der Maschine zugeführt wird.

6. Verfahren nach einem der Ansprüche 1 bis 5,
**dadurch gekennzeichnet, dass** an die Steuerung (SPS) mehrere Sensoren (3) angeschlossen sind.
